# EUROPEAN PATENT SPECIFICATION

(11) **EP 3 116 708 B1**
(45) Date of publication and mention of the grant of the patent: **02.05.2018**
(21) Application number: 15718594.3
(22) Date of filing: 13.03.2015
(51) Int. Cl.: B29C 70/24, B29C 70/34, B32B 5/06, B32B 5/12

(54) **METHOD FOR MAKING A COMPOSITE BOARD**
VERFAHREN ZUR HERSTELLUNG EINER VERBUNDPLATTE
PROCÉDÉ DE FABRICATION D'UNE PLANCHE COMPOSITE

(30) Priority: 13.03.2014 IT TO20140200
(43) Date of publication of application: 18.01.2017
(73) Proprietor: ABET LAMINATI S.p.A., I-12042 Bra (Cuneo) (IT)
(72) Inventor: GASTALDI, Dario, I-12042 Bra (IT)
(74) Representative: Bongiovanni, Simone
(86) International application number: PCT/IB2015/051857
(87) International publication number: WO 2015/136498

(56) References cited:
- EP-B1- 0 591 324

## Description

### TECHNICAL FIELD

The present invention relates to a method for making a composite board.

### BACKGROUND ART

European patent EP-B-0591324 describes a method for making a composite board, wherein a three-dimensional fabric formed by two fabric sheets facing each other and interconnected by a plurality of filaments undergoes a impregnation procedure using thermosetting resin. The fabric, which is interposed between a pair of detaching sheets, is arranged in a heated press provided with a lower half mold and an upper half mold, which are closed so as to obtain the compression of the three-dimensional fabric between the detaching sheets and allow the resin to completely permeate the fabric. Furthermore, the heat produced by the half molds helps start the resin polymerization process. Subsequently, the half molds are opened in order to remove the fabric sheets and stretch the filaments.

At the end of the resin polymerization process, the detaching sheets are removed, thus obtaining a board with a simple structure and a reduced weight.

The board manufactured according to the aforesaid patent EP-B-0591324, though, is not able to stand great pressures applied perpendicular to the laying plane of the board itself; for this reason, this board cannot be used to create surfaces on which people can walk (this board is typically used for partition walls).

### DISCLOSURE OF INVENTION

The object of the present invention is to improve the board described in patent EP-B-0591324, so that it can be used also to create surfaces on which people can walk.

The aforesaid object is reached by the present invention, as it relates to a method for making a layered composite structure **characterized** in **that it comprises** the steps of
a) making a layered structure comprising at least the following elements:
   at least a first fabric sheet defining a first side of the layered structure;
   a first three-dimensional fabric formed by two fabric sheets overlapping each other and interconnected by a plurality of filaments which extend along first rectilinear directions parallel to each other forming first rectilinear inner channels of the three-dimensional fabric parallel to each other and each delimited by the fabric sheets and by facing filaments;
   a second intermediate three-dimensional fabric formed by two fabric sheets overlapping each other and interconnected by a plurality of filaments which extend along second rectilinear directions parallel to each other forming second rectilinear inner channels of the three-dimensional fabric parallel to each other and each delimited by the fabric sheets and by facing filaments;
   a third intermediate three-dimensional fabric formed by two fabric sheets overlapping each other and interconnected by a plurality of filaments which extend along third rectilinear directions parallel to each other forming third rectilinear inner channels of the three-dimensional fabric parallel to each other and each delimited by the fabric sheets and by facing filaments;
   the first and the third direction being substantially parallel to each other so as to form the first and third channels arranged substantially parallel to each other; the second direction forming an angle different from zero with respect to the first and the third direction so as to form second channels arranged transversally with respect to the first and the third channels;
   at least a second fabric sheet defining a second side of the layered structure;
b) carrying out the impregnation of the elements of the layered structure using synthetic thermosetting resin;
c) compressing the layered structure with a heated press in such a way that the resin is evenly distributed between the various elements of the layered structure;
d) expanding the previously compressed layered structure opening the press in a controlled manner in such a way that the filaments of the first, second and third three-dimensional fabric stretch and arrange themselves substantially perpendicular to the laying planes of the fabric sheets forming the three-dimensional fabrics;
e) carrying out the polymerization of the resin impregnating the layered structure; and
f) extracting the layered composite structure from the press.

The present invention also relates to a board formed by a layered structure embedded into cured resin comprising at least the following elements interconnected together by the resin:
a first fabric sheet embedded in cured resin and defining a first flat side of the board;
a first three-dimensional fabric embedded in cured resin and formed by two fabric sheets overlapping each other and interconnected by a plurality of hardened filaments which extend along first rectilinear directions parallel to each other forming first rectilinear inner channels of the three-dimensional fabric parallel to each other and each delimited by the fabric sheets and by facing hardened filaments;
a second intermediate three-dimensional fabric embedded in cured resin and formed by two fabric sheets overlapping each other and interconnected by a plurality of hardened filaments which extend along second rectilinear directions parallel to each other forming second rectilinear inner channels of the three-dimensional fabric parallel to each other and each delimited by the fabric sheets and by facing hardened filaments;
a third three-dimensional fabric embedded in cured resin and formed by two fabric sheets overlapping each other and interconnected by a plurality of hardened filaments which extend along third rectilinear directions parallel to each other forming third rectilinear inner channels of the three-dimensional fabric parallel to each other and each delimited by the fabric sheets and by facing hardened filaments;
the first and third channels are arranged substantially parallel to each other and the second channel is arranged transversally, in particular perpendicular, with respect to the first and third channels;
a second fabric sheet embedded in cured resin and defining a second flat side of the board.

### BRIEF DESCRIPTION OF THE DRAWINGS

The invention will now be described with reference to the accompanying drawings, wherein:
- figures 1 shows a layered structure used according to the present invention for making the composite board; and
- figure 2 shows, in a perspective view, the composite board made according to the method of the present invention;
- figure 3 shows a variant o the board of figure 1.

### BEST MODE FOR CARRYING OUT THE INVENTION

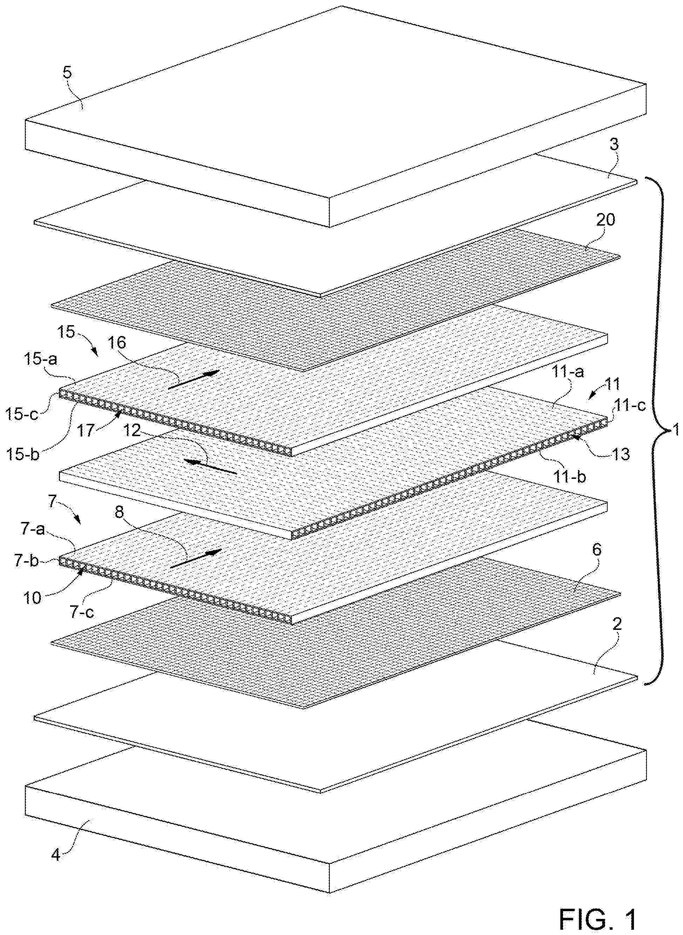

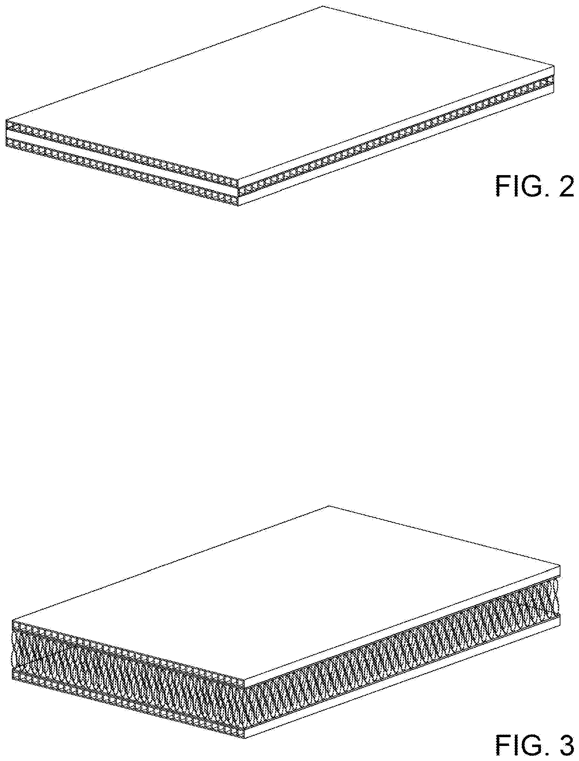

**Figure 1** schematically shows the method according to the present invention for making the board of figure 2.

The method of the present invention is used to manufacture a flat layered structure 1, which is made on a working surface (not shown), where the different elements making up the layered structure 1 itself are overlapped. The working surface is also provided with a device (of a known type, not shown), which is designed to pour a liquid thermosetting resin on the different elements making up the layered structure, thus carrying out the impregnation of the layered structure 1.

The layered structure 1, at the end of its formation and impregnation, is interposed between a pair of detaching sheets 2, 3, which are impervious to resin and conveniently made of Mylar. Typically, the sheets 2, 3 have a rectangular perimeter and are larger than the layered structure 1.

The layered structure 1 interposed between the detaching sheets 2, 3 is brought from the working surface (not shown) to a press (schematically and partially shown in figure 1), which is provided with a lower half mold 4 and with an upper half mold 5, defining flat rectangular surfaces facing each other and heated at a controlled temperature.

The press carries out a closing step, during which the half molds 4, 5 are closed and the layered structure 1 is compressed so as to allow the resin to uniformly spread among the different elements of the layered structure 1.

As explained more in detail below, the press is reopened, so that the layered structure 1 can expand and, at the same time, harden after the progressive polymerization of the resin.

At the end of the resin polymerization, the layered structure is taken out of the press; subsequently, the detaching sheets are removed, thus obtaining a board that is then sent to a seasoning step, during which the complete cross-linking of the resin takes place.

With reference to figure 1, the layered structure 1 comprises at least the following elements, which are listed one after the other starting from the bottom:
at least a first fabric sheet 6 (for example made of glass fibre) defining a first lower side of the layered structure 1;
a first three-dimensional fabric 7 (the three-dimensional fabric, of a known type, is described in European patent EP0816258) formed by two glass fibre fabric sheets 7-a, 7-b overlapping each other and interconnected by a plurality of filaments 7-c which extend along first rectilinear directions 8 parallel to each other and equally spaced apart from each other forming first rectilinear inner channels 10 (the channels typically have a square cross-section) of the three-dimensional fabric 7 parallel to each other and each delimited by the fabric sheets 7-a, 7-b and by facing filaments 7-c;
a second intermediate three-dimensional fabric 11 formed by two glass fibre fabric sheets 11-a, 11-b overlapping each other and interconnected by a plurality of filaments 11-c which extend along second rectilinear directions 12 parallel to each other and equally spaced apart from each other forming second rectilinear inner channels 13 (typically with a square cross-section) of the three-dimensional fabric 11 parallel to each other and each delimited by the fabric sheets 11-a, 11-b and by facing filaments 11-c;
a third intermediate three-dimensional fabric 15 formed by two glass fibre fabric sheets 15-a, 15-b overlapping each other and interconnected by a plurality of filaments 15-c which extend along third rectilinear directions 16 parallel to each other forming third rectilinear inner channels 17 of the three-dimensional fabric 15 parallel to each other and each delimited by the fabric sheets 15-a, 15-b and by facing filaments 15-c;
the first and the third direction 8, 16 are substantially parallel to each other so as to form the first and third channels 10, 17 arranged substantially parallel to each other; the second direction 12 forms an angle different from zero (typically a 90° angle) with respect to the first and the third direction 8, 16 so as to form second channels 13 arranged transversally (typically perpendicular) with respect to the first and the third channels 10, 17;
at least a second glass fibre fabric sheet 20 defining a second upper side of the layered structure 1.

The elements are arranged on the working surface in such a way that they are coplanar to each other, thus forming a flat layered surface 1. Furthermore, a layer of resin is poured on each element before a further element is overlapped; in this way, one can carry out the complete impregnation of the elements of the layered structure using a synthetic thermosetting resin, which coats the glass fiber fabric sheets 20, 15-a, 15-b, 11-a, 11-b, 7-a, 7-b and soaks the filaments 15-c, 11-c and 7-c.

The layered structure 1 is then moved into the press (usually with a translation movement of the working surface) arranging the detaching sheet 2 on the lower half mold 4 and the facing detaching sheet 5 on the upper half mold 5.

The press is closed, so that the layered structure is compressed between the detaching sheets 2, 3 and the resin uniformly spreads among the different elements of the layered structure, thus impregnating the filaments 7-c, 11-c and 15-c in a complete manner.

The press is kept closed for some seconds, so that the resin polymerization process can start and, subsequently, the half molds are moved apart from each other in order to carry out the expansion of the previously compressed layered structure.

In this way, the sheets 7-a and 7b, 11-a and 11-b and 15-a, 15-b separate from each other and the filaments 7-c, 11-c and 15-c straighten up and stretch, arranging themselves substantially perpendicular to the laying planes of the fabric sheets 7-a and 7b, 11-a and 11-b and 15-a, 15-b forming the three-dimensional fabrics.

The layered structure remains in the press for some more seconds, until the resin impregnating the layered structure 1 completes its polymerization.

The layered structure, hardened by the resin, is removed from the press and left to rest for some hours. Subsequently, the detaching sheets are removed, thus obtaining a finished board.

Typically, the board is finished by removing excess material from its sides, so that it has a rectangular perimeter.

The board obtained in this manner is formed by a layered structure embedded into cured resin comprising at least the following elements:
the first glass fibre fabric sheet 6 embedded in cured resin and defining a first flat side of the board;
the first three-dimensional fabric 7 embedded in cured resin and formed by the two glass fibre fabric sheets 7-a, 7-b overlapping each other and interconnected by the hardened filaments 7-c which extend along first rectilinear directions parallel to each other forming the first rectilinear inner channels 10 of the three-dimensional fabric parallel to each other and each delimited by the fabric sheets and by facing hardened filaments;
the second intermediate three-dimensional fabric 11 embedded in cured resin and formed by the two glass fibre fabric sheets 11-a, 11-b overlapping each other and interconnected by a plurality of hardened filaments 11-c which extend along second rectilinear directions parallel to each other forming the second rectilinear inner channels 13 of the three-dimensional fabric parallel to each other and each delimited by the fabric sheets and by facing hardened filaments;
the third three-dimensional fabric 15 embedded in cured resin and formed by the two glass fibre fabric sheets (15-a, 15-b) overlapping each other and interconnected by a plurality of hardened filaments 15-c which extend along third rectilinear directions parallel to each other forming the third rectilinear inner channels 17 of the three-dimensional fabric parallel to each other and each delimited by the fabric sheets and by facing hardened filaments;
the first and third channels 10, 17 are arranged substantially parallel to each other and the second channel 13 is arranged transversally (in particular perpendicular) with respect to the first and third channels 10, 15;
the second glass fibre fabric sheet 20 embedded in cured resin and defining a second flat side of the board.

The board described above has a series of advantages compared to the boards of the prior art:
the board described above has an extremely robust structure, which is able to even stand concentrated loads - for this reason the board can advantageously be used to build the floors of a train or a ship, for example;
the board defines inner cavities (the channels 13) that can convey fluids (e.g. air) used to heat / cool the room in which the board is installed - these channels 13 are not easily accessible from the opposite sides of the board, thus ensuring a safe transportation of the fluids.

According to a variant of the invention shown in figure 3, the intermediate three-dimensional fabric can be different from the one described above, namely it can comprise two glass fibre fabric sheets 11-a, 11-b overlapping each other and interconnected by a plurality of filaments 11-c which extend between the fabric sheets forming eight-shaped filament interconnection bridges.

After the opening of the press, the filaments 8c stretch and assume the typical eight shape. Therefore, the intermediate three-dimensional fabric defines a single chamber (the eight-shaped elements are spaced apart from each other and cannot define dividing walls), in which the heating / cooling fluid can circulate.

## Claims

1. A method for making a layered composite structure comprising the steps of a) making a layered structure comprising at least the following elements:
at least a first fabric sheet (6) defining a first side of the layered structure;
a first three-dimensional fabric (7) formed by two fabric sheets (7-a, 7-b) overlapping each other and interconnected by a plurality of filaments (7-c) which extend along first rectilinear directions parallel to each other forming first rectilinear inner channels (10) of the three-dimensional fabric parallel to each other and each delimited by the fabric sheets and by facing filaments;
a second intermediate three-dimensional fabric (11) formed by two fabric sheets (11-a, 11-b) overlapping each other and interconnected by a plurality of filaments (11-c) which extend along second rectilinear directions (12) parallel to each other forming second rectilinear inner channels (13) of the three-dimensional fabric parallel to each other and each delimited by the fabric sheets and by facing filaments;
a third intermediate three-dimensional fabric (15) formed by two fabric sheets (15-a, 15-b) overlapping each other and interconnected by a plurality of filaments (15-c) which extend along third rectilinear directions (16) parallel to each other forming third rectilinear inner channels (17) of the three-dimensional fabric parallel to each other and each delimited by the fabric sheets and by facing filaments;
the first and the third direction (8, 16) being substantially parallel to each other so as to form the first and third channels (10, 17) arranged substantially parallel to each other; the second direction (12) forming an angle different from zero with respect to the first and the third direction (8, 16) so as to form second channels (13) arranged transversally with respect to the first and the third channels (10, 15);
at least a second fabric sheet (20) defining a second side of the layered structure;
b) carrying out the impregnation of the elements of the layered structure using synthetic thermosetting resin;
c) compressing the layered structure with a heated press in such a way that the resin is evenly distributed between the various elements of the layered structure;
d) expanding the previously compressed layered structure opening the press in a controlled manner in such a way that the filaments of the first, second and third three-dimensional fabric stretch and arrange themselves substantially perpendicular to the laying planes of the fabric sheets forming the three-dimensional fabrics;
e) carrying out the polymerization of the resin impregnating the layered structure; and
f) extracting the layered composite structure from the press.

2. A method according to claim 1, wherein the layered structure is arranged between a pair of detaching sheets (2, 3) impervious to the resin, which are pressed by opposite half molds of said press in said step c);
said method further comprising the step of:
e) removing said detaching sheets from the layered structure after the complete curing of said resin.

3. A method according to claim 1 or 2, wherein the second direction (12) forms an angle of 90° with respect to the first and third direction (8, 16) so as to form second channels (13) arranged perpendicular to the first and the third channels (10, 15).

4. A board obtainable by any one of the preceding claims.

5. A board formed by a layered structure embedded into cured resin comprising at least the following elements interconnected together by the resin:
a first fabric sheet (6) embedded in cured resin and defining a first flat side of the board;
a first three-dimensional fabric (7) embedded in cured resin and formed by two fabric sheets (7-a, 7-b) overlapping each other and interconnected by a plurality of hardened filaments (7-c) which extend along first rectilinear directions parallel to each other forming first rectilinear inner channels (10) of the three-dimensional fabric parallel to each other and each delimited by the fabric sheets and by facing hardened filaments;
a second intermediate three-dimensional fabric (11) embedded in cured resin and formed by two fabric sheets (11-a, 11-b) overlapping each other and interconnected by a plurality of hardened filaments (11-c) which extend along second rectilinear directions parallel to each other forming second rectilinear inner channels (13) of the three-dimensional fabric parallel to each other and each delimited by the fabric sheets and by facing hardened filaments;
a third three-dimensional fabric (15) embedded in cured resin and formed by two fabric sheets (15-a, 15-b) overlapping each other and interconnected by a plurality of hardened filaments (15-c) which extend along third rectilinear directions parallel to each other forming third rectilinear inner channels (17) of the three-dimensional fabric parallel to each other and each delimited by the fabric sheets and by facing hardened filaments;
the first and third channels (10, 17) are arranged substantially parallel to each other and the second channel (13) is arranged transversally, in particular perpendicular, with respect to the first and third channels (10, 15);
a second fabric sheet (20) embedded in cured resin and defining a second flat side of the board.

## Patentansprüche

1. Verfahren zur Herstellung einer Schichtverbundstruktur, die folgenden Schritte umfassend:
(a) Herstellen einer Schichtstruktur, die wenigstens die folgenden Elemente umfasst:
wenigstens eine erste Strukturplatte (6), die eine erste Seite der Schichtstruktur definiert;
eine erste dreidimensionale Struktur (7), die aus zwei Strukturplatten (7-a, 7-b) gebildet ist, die sich überlappen und durch eine Mehrzahl von Fasern (7-c) miteinander verbunden sind, die sich entlang erster geradliniger Richtungen parallel zueinander erstrecken und erste geradlinige Innenkanäle (10) der dreidimensionalen Struktur bilden, die parallel zueinander verlaufen und jeweils durch die Strukturplatten und durch gegenüberliegende Fasern begrenzt sind;
eine zweite dreidimensionale Zwischenstruktur (11), die aus zwei Strukturplatten (11-a, 11-b) gebildet ist, die sich gegenseitig überlappen und durch eine Mehrzahl von Fasern (11-c) miteinander verbunden sind, die sich entlang zweiter geradliniger Richtungen (12) parallel zueinander erstrecken und zweite geradlinige Innenkanäle (13) der dreidimensionalen Struktur bilden, die parallel zueinander verlaufen und jeweils durch die Strukturplatten und durch gegenüberliegende Fasern begrenzt sind;
eine dritte dreidimensionale Zwischenstruktur (15), die aus zwei Strukturplatten (15-a, 15-b) gebildet ist, die einander überlappen und durch eine Mehrzahl von Fasern (15-c) miteinander verbunden sind, die sich entlang dritter geradliniger Richtungen (16) parallel zueinander erstrecken und dritte geradlinige Innenkanäle (17) der dreidimensionalen Struktur bilden, die parallel zueinander verlaufen und jeweils durch die Strukturplatten und durch gegenüberliegende Fasern begrenzt sind;
wobei die erste und die dritte Richtung (8, 16) im Wesentlichen parallel zueinander sind, um die ersten und dritten Kanäle (10, 17) zu bilden, die im Wesentlichen parallel zueinander angeordnet sind; wobei die zweite Richtung (12) einen Winkel bildet, der sich von Null in Bezug auf die erste und die dritte Richtung (8, 16) unterscheidet, um so zweite Kanäle (13) zu bilden, die quer zu den ersten und dritten Kanälen (10, 15) angeordnet sind;
wenigstens eine zweite Strukturplatte (20), die eine zweite Seite der Schichtstruktur definiert;
(b) Durchführung der Imprägnierung der Elemente der Schichtstruktur mit synthetischem, thermohärtendem Harz;
(c) Komprimieren der Schichtstruktur mit einer beheizten Presse, so dass das Harz gleichmäßig zwischen den verschiedenen Elementen der Schichtstruktur verteilt ist;
(d) Ausdehnen der zuvor komprimierten Schichtstruktur, wobei die Presse derart kontrolliert geöffnet wird, dass sich die Fasern der ersten, zweiten und dritten dreidimensionalen Struktur dehnen und sich im Wesentlichen senkrecht zu den Verlege-Ebenen der die dreidimensionale Struktur bildenden Strukturplatten anordnen;
(e) Durchführung der Polymerisation des Harzes, das die Schichtstruktur imprägniert; und
(f) Extrahieren der Schichtverbundstruktur aus der Presse.

2. Verfahren nach Anspruch 1, wobei die Schichtstruktur zwischen einem Paar von für das Harz undurchlässigen Ablöseschichten (2, 3) angeordnet ist, die durch entgegengesetzte Halbformen der Presse in Schritt c) gepresst werden;
wobei das Verfahren weiterhin den Schritt umfasst:
e) Entfernen der Ablöseschichten von der Schichtstruktur nach der vollständigen Aushärtung des Harzes.

3. Verfahren nach Anspruch 1 oder 2, wobei die zweite Richtung (12) einen Winkel von 90° in Bezug auf die erste und dritte Richtung (8, 16) bildet, um zweite Kanäle (13) zu bilden, die senkrecht zu den ersten und dritten Kanälen (10, 15) angeordnet sind.

4. Platte, die durch einen der vorstehenden Ansprüche erzielbar ist.

5. Platte, die aus einer Schichtstruktur gebildet ist, die in ein gehärtetes Harz eingebettet ist, die wenigstens die folgenden Elemente umfasst, die durch das Harz miteinander verbunden sind:
eine erste Strukturplatte (6), die in gehärtetes Harz eingebettet ist und eine erste flache Seite der Platte definiert;
eine erste dreidimensionale Struktur (7), die in gehärtetem Harz eingebettet ist und die aus zwei Strukturplatten (7-a, 7-b) gebildet ist, die sich überlappen und durch eine Mehrzahl von gehärteten Fasern (7-c) miteinander verbunden sind, die sich entlang erster geradliniger Richtungen parallel zueinander erstrecken und erste geradlinige Innenkanäle (10) der dreidimensionalen Struktur bilden, die parallel zueinander verlaufen und jeweils durch die Strukturplatten und durch gegenüberliegende Fasern begrenzt sind;
eine zweite dreidimensionale Zwischenstruktur (11), die in gehärtetem Harz eingebettet ist und durch zwei Strukturplatten (11-a, 11-b) gebildet ist, die sich überlappen und durch eine Mehrzahl von gehärteten Fasern (11-c) miteinander verbunden sind, die sich entlang zweiter geradliniger Richtungen parallel zueinander erstrecken und zweite geradlinige Innenkanäle (13) der dreidimensionalen Struktur bilden, die parallel zueinander verlaufen und jeweils durch die Strukturplatten und durch gegenüberliegende gehärtete Fasern begrenzt sind;
eine dritte dreidimensionale Struktur (15), die in gehärtetes Harz eingebettet ist und durch zwei Strukturplatten (15-a, 15-b) gebildet ist, die sich überlappen und durch eine Mehrzahl von gehärteten Fasern (15-c) miteinander verbunden sind, die sich entlang dritter geradliniger Richtungen parallel zueinander erstrecken und dritte geradlinige Innenkanäle (17) der dreidimensionalen Struktur bilden, die parallel zueinander verlaufen und jeweils durch die Strukturplatten und durch gegenüberliegende gehärtete Fasern begrenzt sind;
wobei die ersten und dritten Kanäle (10, 17) im Wesentlichen parallel zueinander angeordnet sind und wobei der zweite Kanal (13) quer, insbesondere senkrecht, in Bezug auf die ersten und dritten Kanäle (10, 15) angeordnet ist;
eine zweite Strukturplatte (20), die in gehärtetem Harz eingebettet ist und eine zweite flache Seite der Platte definiert.

## Revendications

1. Procédé de fabrication d'une structure composite stratifiée comprend les étapes de :
a) réaliser une structure en couches comprenant au moins les éléments suivants :
au moins une première feuille de tissu (6) définissant un premier côté de la structure en couches ;
un premier tissu tridimensionnel (7) formé par deux feuilles de tissu (7-a, 7-b) se chevauchant et interconnectées par une pluralité de filaments (7-c) qui s'étendent le long de premières directions rectilignes parallèles les unes aux autres formant des premiers canaux internes rectilignes (10) du tissu tridimensionnel parallèles entre eux et délimités chacun par les feuilles de tissu et par des filaments en regard;
un deuxième tissu intermédiaire tridimensionnel (11) formé par deux feuilles de tissu (11-a, 11-b) se chevauchant et interconnectées par une pluralité de filaments (11-c) qui s'étendent le long de deuxièmes directions rectilignes (12) parallèles les unes aux autres formant des seconds canaux internes rectilignes (13) du tissu tridimensionnel parallèles entre eux et délimités chacun par les feuilles de tissu et par des filaments en regard;
un troisième tissu intermédiaire tridimensionnel (15) formé par deux feuilles de tissu (15-a, 15-b) se chevauchant et interconnectées par une pluralité de filaments (15-c) qui s'étendent le long de troisièmes directions rectilignes (16) parallèles les unes aux autres formant des troisièmes canaux internes rectilignes (17) du tissu tridimensionnel parallèles entre eux et délimités chacun par les feuilles de tissu et par des filaments en regard;
la première et la troisième direction (8, 16) étant sensiblement parallèles l'une à l'autre de manière à former les premiers et troisièmes canaux (10, 17) agencés sensiblement parallèlement entre eux; la deuxième direction (12) formant un angle différent de zéro par rapport à la première et à la troisième direction (8, 16) de façon à former des deuxièmes canaux (13) disposés transversalement par rapport aux premiers et troisièmes canaux (10, 15 ) ;
au moins une seconde feuille de tissu (20) définissant un second côté de la structure stratifiée;
b) effectuer l'imprégnation des éléments de la structure stratifiée en utilisant une résine thermodurcissable synthétique;
c) comprimer la structure stratifiée avec une presse chauffée de telle sorte que la résine soit répartie uniformément entre les divers éléments de la structure stratifiée;
d) dilater la structure stratifiée préalablement comprimée en ouvrant la presse d'une manière contrôlée de telle sorte que les filaments des premier, deuxième et troisième tissus tridimensionnels s'étirent et se disposent sensiblement perpendiculairement aux plans de pose des feuilles de tissu formant les tissus tridimensionnels;
e) effectuer la polymérisation de la résine imprégnant la structure stratifiée; et
f) extraire la structure composite stratifiée de la presse.

2. Procédé selon la revendication 1, dans lequel la structure stratifiée est agencée entre une paire de feuilles détachables (2, 3) imperméables à la résine, qui sont pressées par des demi-moules opposés de ladite presse dans ladite étape c);
ledit procédé comprenant en outre l'étape consistant à:
e) enlever lesdites feuilles détachables de la structure stratifiée après le durcissement complet de ladite résine.

3. Procédé selon la revendication 1 ou 2, dans lequel la deuxième direction (12) forme un angle de 90 ° par rapport aux première et troisième directions (8, 16) de manière à former des deuxièmes canaux (13) disposés perpendiculairement aux premiers et troisièmes canaux (10, 15).

4. Une planche obtenue par l'une quelconque des revendications précédentes.

5. Une planche formée par une structure stratifiée noyée dans une résine durcie comprenant au moins les éléments suivants interconnectés entre eux par la résine:
une première feuille de tissu (6) noyée dans de la résine durcie et définissant un premier côté plat de la plaque;
un premier tissu tridimensionnel (7) noyé dans une résine durcie et formé par deux feuilles de tissu (7-a, 7-b) se chevauchant et interconnectées par une pluralité de filaments durcis (7-c) qui s'étendent le long de premières directions rectilignes parallèles les unes aux autres formant des premiers canaux internes rectilignes (10) du tissu tridimensionnel parallèles entre eux et délimités chacun par les feuilles de tissu et par des filaments durcis en regard;
un deuxième tissu intermédiaire tridimensionnel (11) noyé dans une résine durcie et formé par deux feuilles de tissu (11-a, 11-b) se chevauchant et interconnectées par une pluralité de filaments durcis (11-c) qui s'étendent le long de deuxièmes directions rectilignes parallèles les unes aux autres formant des deuxièmes canaux internes rectilignes (13) du tissu tridimensionnel parallèles entre eux et délimités chacun par les feuilles de tissu et par des filaments durcis en regard;
un troisième tissu tridimensionnel (15) noyé dans une résine durcie et formé par deux feuilles de tissu (15-a, 15-b) se chevauchant et interconnectées par une pluralité de filaments durcis (15-c) qui s'étendent le long de troisièmes directions rectilignes parallèles les unes aux autres formant des troisièmes canaux internes rectilignes (17) du tissu tridimensionnel parallèles entre eux et délimités chacun par les feuilles de tissu et par des filaments durcis en regard;
les premier et troisième canaux (10, 17) sont disposés sensiblement parallèlement les uns aux autres et le deuxième canal (13) est disposé transversalement, en particulier perpendiculairement, par rapport aux premiers et troisièmes canaux (10, 15);
une seconde feuille de tissu (20) noyée dans une résine durcie et définissant un second côté plat de la planche.
